# EUROPEAN PATENT APPLICATION

(11) **EP 2 996 434 A1**
(43) Date of publication of application: **16.03.2016**
(21) Application number: 14794116.5
(22) Date of filing: 15.04.2014
(51) Int. Cl.: H04W 88/02

(54) **COMMUNICATION SYSTEM, NETWORK ELEMENT DEVICE AND SERVICE PROCESSING METHOD THEREOF**

(30) Priority: 09.05.2013 CN 201310169310
(71) Applicant: ZTE Corporation, Shenzhen, Guangdong 518057 (CN)
(72) Inventor: YAO, Wenjun, Shenzhen Guangdong 518057 (CN); YU, Qingqi, Shenzhen Guangdong 518057 (CN); LIU, Shaolin, Shenzhen Guangdong 518057 (CN)
(74) Representative: Brevalex
(86) International application number: PCT/CN2014/075394
(87) International publication number: WO 2014/180225

(57) **Abstract**

Disclosed are a communication system, a network element device and a service processing method thereof. The network element device includes a transmission bearer management module and a service processing module, wherein the service processing module is configured to judge whether a corresponding network element device supports a transmission bearer pre-establishment function or not, and transmit a judgment result to the transmission bearer management module; the transmission bearer management module is configured to establish transmission bearers required by services between the network element device and the corresponding network element device according to the judgment result; and the service processing module is further configured to select one transmission bearer from the transmission bearers established by the transmission bearer management module to transmit a service to the corresponding network element device after receiving a user service establishment request.

## Description

### TECHNICAL FIELD

The disclosure relates to the field of mobile communications, and in particular to a communication system, a network element device and a service processing method thereof.

### BACKGROUND

Along with continuous increase of terminal users in a Universal Mobile Telecommunication System (UMTS) network, service bearers are established and released more and more frequently. When a system continuously performs radio link establishment, reconfiguration and releasing, it is necessary to operate service bearers, and system resource requesting and configuration are required by service bearer processing of each time. Traffic increase in a network system may cause high system resource consumption for processing of a great number of service bearers and influence on service processing time in frequent radio link establishment, reconfiguration and deletion processes.

### SUMMARY

A main purpose of the embodiments of the disclosure is to provide a communication system, a network element device and a service processing method thereof, which may reduce system resource consumption.

In order to achieve the purpose, an embodiment of the disclosure provides a network element device, which includes a transmission bearer management module and a service processing module, wherein
the service processing module is configured to judge whether a corresponding network element device supports a transmission bearer pre-establishment function or not, and transmit a judgment result to the transmission bearer management module;
the transmission bearer management module is configured to establish transmission bearers required by services between the network element device and the corresponding network element device according to the judgment result; and
the service processing module is further configured to select one transmission bearer from the transmission bearers established by the transmission bearer management module to transmit a service to the corresponding network element device after receiving a user service establishment request.

Furthermore, the service processing module may include a judgment sub-module, an information transceiver sub-module and a service processing sub-module, wherein
the information transceiver sub-module is configured to send judgment information to the corresponding network element device, the judgment information including information identifying that the network element device supports the transmission bearer pre-establishment function, and receive response information from the corresponding network element device, the response information including information identifying whether the corresponding network element device supports the transmission bearer pre-establishment function or not;
the judgment sub-module is configured to judge whether the corresponding network element device supports the transmission bearer pre-establishment function or not according to the response information, and transmit a judgment result to the transmission bearer management module; and
the service processing sub-module is configured to select one transmission bearer from the transmission bearers established by the transmission bearer management module to transmit the service to the corresponding network element device after receiving the user service establishment request.

Furthermore, the service processing sub-module may be further configured to mark the transmission bearer, which is used for the user service, as an idle state after receiving a user service releasing request.

Furthermore, the judgment information further may include a transmission bearer configuration parameter of the network element device, and the response information further includes a transmission bearer configuration parameter of the corresponding network element device; and
the transmission bearer management module may be configured to establish the transmission bearers required by the services between the network element device and the corresponding network element device according to the transmission bearer configuration parameters of the network element device and the corresponding network element device when the judgment sub-module determines that the corresponding network element device supports the transmission bearer pre-establishment function.

Furthermore, the transmission bearer configuration parameter may include one or more of: the number of transmission bearers needed to be pre-established, address and port information corresponding to the pre-established transmission bearers, and requirements on a service type, a bandwidth and a time delay.

Furthermore, the service processing sub-module may be configured to select one transmission bearer from the established transmission bearers in the idle state to transmit the service to the corresponding network element device after receiving the user service establishment request.

Similarly, in order to achieve the purpose, an embodiment of the disclosure further provides a communication system, which includes a first network element device and a second network element device, wherein the first network element device is the abovementioned network element device;
the first network element device is configured to judge whether the second network element device supports a transmission bearer pre-establishment function or not; and
the first network element device is further configured to pre-establish transmission bearers required by services between network elements when determining that the second network element device supports the transmission bearer pre-establishment function, select one transmission bearer from the transmission bearers pre-established by the first network element device when a user service is established, and send service information to the second network element device through the selected transmission bearer.

Similarly, in order to achieve the purpose, an embodiment of the disclosure further provides a service processing method for a network element device, which includes the following steps:
judging whether a corresponding network element device supports a transmission bearer pre-establishment function or not;
establishing transmission bearers required by services between the network element device and the corresponding network element device according to a judgment result; and
selecting one transmission bearer from the established transmission bearers to transmit a service to the corresponding network element device after a user service establishment request is received.

Furthermore, the process of judging whether the corresponding network element device supports the transmission bearer pre-establishment function or not may include:
sending judgment information to the corresponding network element device, the judgment information including information identifying that the network element device supports the transmission bearer pre-establishment function;
receiving response information from the corresponding network element device, the response information including information identifying whether the corresponding network element device supports the transmission bearer pre-establishment function or not; and
judging whether the corresponding network element device supports the transmission bearer pre-establishment function or not according to the response information.

Furthermore, the service processing method may further include: marking the transmission bearer, which is used for the user service, as an idle state after a user service releasing request is received.

Furthermore, the judgment information may further include a transmission bearer configuration parameter of the network element device, and the response information may further include a transmission bearer configuration parameter of the corresponding network element device; and
the process of establishing the transmission bearers required by the services between the network element device and the corresponding network element device according to the judgment result may include:
establishing the transmission bearers required by the services between the network element device and the corresponding network element device according to the transmission bearer configuration parameters of the network element device and the corresponding network element device when it is determined that the corresponding network element device supports the transmission bearer pre-establishment function.

Furthermore, the step of selecting one transmission bearer from the established transmission bearers to transmit the service to the corresponding network element device after the user service establishment request is received may include:
selecting one transmission bearer from the established transmission bearers in the idle state to transmit the service to the corresponding network element device after the user service establishment request is received.

A computer storage medium is provided, which stores a computer-executable instruction, wherein the computer-executable instruction is configured to execute the abovementioned method.

By the communication system, the network element device and the service processing method thereof provided by the embodiments of the disclosure, system resource consumption may be reduced. The network element device of the embodiment of the disclosure includes the transmission bearer management module and the service processing module, wherein the service processing module is configured to judge whether the corresponding network element device supports a transmission bearer pre-establishment function or not, and transmit a judgment result to the transmission bearer management module; the transmission bearer management module is configured to establish transmission bearers required by services between the network element device and the corresponding network element device according to the judgment result; the service processing module is further configured to select one transmission bearer from the transmission bearers established by the transmission bearer management module to transmit a service to the corresponding network element device after receiving a user service establishment request; the transmission bearer management module in the network element device of the embodiment of the disclosure may pre-establish the transmission bearers according to the judgment result of the service processing module before service establishment is completed and select one transmission bearer from the established transmission bearers for use when receiving the user service establishment request. Compared with an existing technology, the network element device of the embodiment of the disclosure is not required to process service transmission bearers while processing a service, so that excessive processing over the service transmission bearers is avoided, system traffic is reduced, and the system resource consumption is reduced.

### BRIEF DESCRIPTION OF THE DRAWINGS

Fig. 1 is a structure diagram of a network element device according to embodiment 1 of the disclosure;
Fig. 2 is a structure diagram of another network element device according to embodiment 1 of the disclosure;
Fig. 3 is a flowchart of a service processing method for a network element device according to embodiment 2 of the disclosure;
Fig. 4 is a flowchart of a service processing method for another network element device according to embodiment 2 of the disclosure;
Fig. 5 is a structure diagram of a communication system according to embodiment 3 of the disclosure; and
Fig. 6 is a working flowchart of a communication system according to embodiment 3 of the disclosure.

### DETAILED DESCRIPTION

The disclosure is further described below with reference to specific implementation modes and the drawings in detail.

### Embodiment 1:

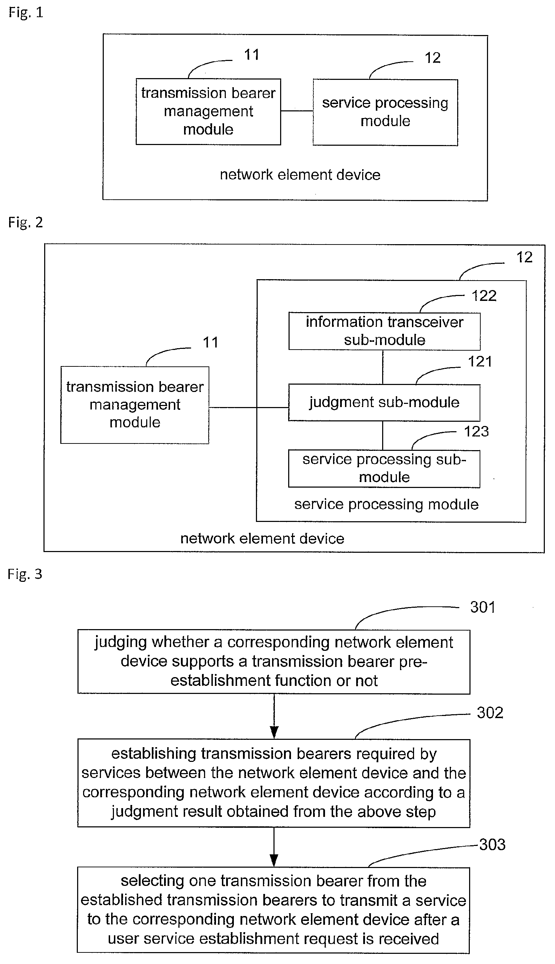

As shown in Fig. 1, the embodiment provides a network element device, which includes a transmission bearer management module 11 and a service processing module 12, wherein
the service processing module 12 is configured to judge whether a corresponding network element device supports a transmission bearer pre-establishment function or not, and transmit a judgment result to the transmission beater management module;
the transmission bearer management module 11 is configured to establish transmission bearers required by services between the network element device and the corresponding network element device according to the judgment result; and
the service processing module 12 is further configured to select one transmission bearer from the transmission bearers established by the transmission bearer management module to transmit a service to the corresponding network element device when receiving a user service establishment request.

The transmission bearer management module 11 in the network element device of the embodiment may pre-establish the transmission bearers according to the judgment result of the service processing module 12 before service establishment and select one transmission bearer from the established transmission bearers for use when a user service is established; and it is unnecessary to operate the service transmission bearers during service establishment, so that system traffic is reduced, and system resource consumption is reduced. For example, when the service processing module 12 determines that the corresponding network element device also supports the transmission bearer pre-establishment function, the transmission bearer management module of the network element device may pre-establish the transmission bearers, and the network element device only needs to allocate one transmission bearer selected from the successfully established transmission bearers to transmit the service in a service establishment process. Since the transmission bearers have been established before the service is established, it is unnecessary to operate the transmission bearers in the service establishment process, which greatly reduces the system resource consumption. In the embodiment, the transmission bearers selected by the service processing module are all currently-unused transmission bearers, i.e. transmission bearers in an idle state. The network element device in the embodiment is taken by default to support the transmission bearer pre-establishment function, it is only necessary to judge whether the corresponding network element device supports the transmission bearer pre-establishment function or not, and if the corresponding network element device supports the transmission bearer pre-establishment function, it is indicated that the two network element devices support the transmission bearer pre-establishment function. If it is unknown whether the network element device of the embodiment supports the transmission bearer pre-establishment function or not, then the service processing module additionally executes a step of judging whether the network element device supports the transmission bearer pre-establishment function or not.

As shown in Fig. 2, the service processing module 12 may include a judgment sub-module 121, an information transceiver sub-module 122 and a service processing sub-module 123, wherein
the information transceiver sub-module is configured to send judgment information to the corresponding network element device, the judgment information including information identifying that the network element device supports the transmission bearer pre-establishment function, and configured to receive response information of the corresponding network element device, the response information including information identifying whether the corresponding network element device supports the transmission bearer pre-establishment function or not;
the judgment sub-module is configured to judge whether the corresponding network element device supports the transmission bearer pre-establishment function or not according to the response information, and transmit a judgment result to the transmission bearer management module; and
the service processing sub-module is configured to select one transmission bearer from the transmission bearers established by the transmission bearer management module to transmit the service to the corresponding network element device after receiving the user service establishment request.

After the network element device is powered on, the transmission bearer management module performs communication handshaking with the corresponding network element device, the information transceiver sub-module in the service processing module sends the information identifying the network element device supports the transmission bearer pre-establishment function to the corresponding network element device after successful handshaking, the corresponding network element device returns the corresponding response information after receiving the identification information, the response information including the information identifying whether the corresponding network element device supports the transmission bearer pre-establishment function or not, and if the corresponding network element device returns information identifying the corresponding network element device supports the transmission bearer pre-establishment function, the judgment sub-module may determine that the corresponding network element device supports the transmission bearer pre-establishment function, and then the transmission bearer management module may establish the transmission bearers required by service transmission between the two network element devices; and if the corresponding network element device returns information identifying that the corresponding network element device does not support the transmission bearer pre-establishment function, then the judgment sub-module may determine that the corresponding network element device does not support the transmission bearer pre-establishment function, and the transmission bearer management module may not establish the transmission bearers; when a service is established, the network element device processes the service transmission bearers according to an original system processing flow.

The service processing sub-module in the network element device of the embodiment is further configured to mark the transmission bearer, which is used for the user service, as the idle state after receiving a user service releasing request. After the user service is released, the service processing module may further release the transmission bearer for the service and mark the transmission bearer as the idle state, and then the transmission bearer management module may allocate the transmission bearer for another service in need for continuous use, so that a utilization rate of the transmission bearer is increased.

In the embodiment, the process that the transmission bearer management module establishes the transmission bearers may specifically be as follows:
the judgment information further includes a transmission bearer configuration parameter of the network element device, and the response information further includes a transmission bearer configuration parameter of the corresponding network element device; and
the transmission bearer management module is configured to establish the transmission bearers required by the services between the network element device and the corresponding network element device according to the transmission bearer configuration parameters of the network element device and the corresponding network element device when the judgment sub-module determines that the corresponding network element device supports the transmission bearer pre-establishment function.

In the embodiment, the transmission bearer configuration parameter includes one or more of: the number of transmission bearers needed to be pre-established, address and port information corresponding to the pre-established transmission bearers, and requirements on a service type, a bandwidth and a time delay.

The network element device of the embodiment negotiates with the corresponding network element device about their transmission bearer configuration parameters, and determines established transmission bearers to be established after negotiation. The transmission bearer management module allocates the transmission bearers to the services for use in the service establishment process.

In the embodiment, the process that the service processing sub-module selects the transmission bearer is as follows: the service processing sub-module selects one transmission bearer from the established transmission bearers in the idle state to transmit the service to the corresponding network element device after receiving the user service establishment request.

The process that the network element device of the embodiment allocates the transmission beater after receiving the user service establishment request is specifically as follows:
the service processing sub-module is configured to select one transmission bearer from the established transmission bearers in the idle state after receiving the user service establishment request, send information of the selected transmission bearer to the corresponding network element device, receive from the corresponding network element device the information of the transmission bearer which is selected by the corresponding network element device, store transmission bearer information and transmit the service to the corresponding network element device through the transmission bearer selected by the network element device. The service processing module of the embodiment further transmits the selected transmission bearer to the corresponding network element device after selecting the transmission bearer, and the corresponding network element device selects the corresponding transmission bearer for the service according to the received transmission bearer information. Here, the service processing module of the embodiment selects one transmission bearer from the established transmission bearers in the idle state, and a state of the transmission bearer selected by the module is the idle state.

### Embodiment 2:

As shown in Fig. 3, the embodiment provides a service processing method for a network element device, which includes the following steps:
Step 301: judging whether a corresponding network element device supports a transmission bearer pre-establishment function or not;
Step 302: establishing transmission bearers required by services between the network element device and the corresponding network element device according to a judgment result obtained in Step 301; and
Step 303: selecting one transmission bearer from the established transmission bearers to transmit a service to the corresponding network element device after a user service establishment request is received.

According to the service processing method for the network element device provided by the embodiment, the transmission bearers required by the services may be pre-established before service establishment, and it is only necessary to allocate one transmission beater selected from the established transmission bearers to the service when a service is established; and by the service processing method of the embodiment, operation of a system over the service transmission bearers during service establishment is avoided, system traffic is reduced, and system resource consumption is reduced.

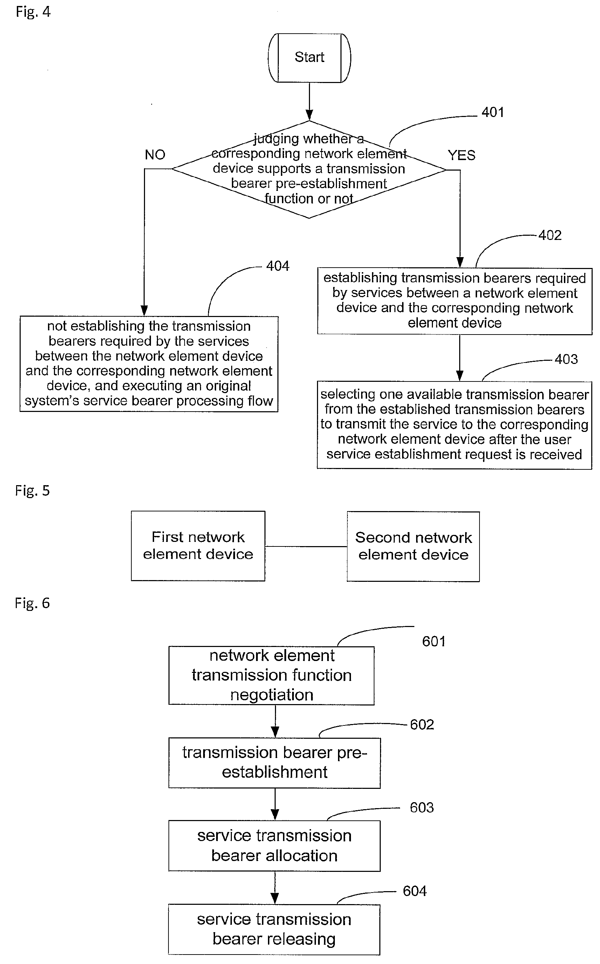

As shown in Fig. 4, a flow of the service processing method for the network element device in the embodiment is introduced, including:
Step 401: judging whether the corresponding network element device supports the transmission bearer pre-establishment function or not, executing Step 402 if YES, and if NO, executing Step 404;
Step 402: establishing the transmission bearers required by the services between the network element device and the corresponding network element device;
Step 403: selecting one available transmission bearer from the established transmission bearers to transmit the service to the corresponding network element device after the user service establishment request is received; and
Step 404: not establishing the transmission bearers required by the services between the network element device and the corresponding network element device, and executing an original system's service bearer processing flow.

According to the embodiment, the service processing method for the network element device further includes: marking the transmission bearer, which is used for the user service, as an idle state after a user service releasing request is received. After the user service is released, the network element device releases the transmission bearer for the user service and marks the transmission bearer as the idle state, and then the released transmission bearer may be allocated to another service in need for continuous use, so that the utilization rate of the transmission bearer is increased.

The process of judging whether the corresponding network element device supports the transmission bearer pre-establishment function or not in Step 301 includes:
sending judgment information to the corresponding network element device, the judgment information including information identifying that the network element device supports the transmission bearer pre-establishment function;
receiving response information of the corresponding network element device, the response information including information identifying whether the corresponding network element device supports the transmission bearer pre-establishment function or not; and
judging whether the corresponding network element device supports the transmission bearer pre-establishment function or not according to the response information.

The specific process of establishing the transmission bearers in the service processing method of the embodiment is introduced below:
the judgment information further includes a transmission bearer configuration parameter of the network element device, and the response information further includes a transmission bearer configuration parameter of the corresponding network element device; and
the process of establishing the transmission bearers required by the services between the network element device and the corresponding network element device according to the judgment result in Step 302 includes:
   establishing the transmission bearers required by the services between the network element device and the corresponding network element device according to the transmission bearer configuration parameters of the network element device and the corresponding network element device when it is determined that the corresponding network element device supports the transmission bearer pre-establishment function.

The process of allocating the transmission bearers in the service processing method of the embodiment is as follows:
the step of selecting one transmission bearer from the established transmission bearers to transmit the service to the corresponding network element device after the user service establishment request is received in Step 303 includes:
   selecting one transmission bearer from the established transmission bearers in the idle state to transmit the service to the corresponding network element device after the user service establishment request is received.

According to the service processing method of the embodiment, the network element device further transmits the selected transmission bearer to the corresponding network element device after selecting the transmission bearer, and the corresponding network element device selects a corresponding transmission bearer for the service according to the information of the received transmission bearer.

### Embodiment 3:

As shown in Fig. 5, the embodiment provides a communication system, which includes a first network element device and a second network element device, wherein the first network element device is the network element device of embodiment 1;
the first network element device is configured to judge whether the second network element device supports a transmission bearer pre-establishment function or not; and
the first network element device is further configured to pre-establish transmission bearers required by services between the network elements when it is determined that the second network element device supports the transmission bearer pre-establishment function, select one transmission bearer from the transmission bearers pre-established by the first network element device when a user service is established, and send information of the service to the second network element device through the selected transmission bearer.

Wherein, the second network element device in the communication system of the embodiment may also be the network element device of embodiment 1, that is, the second network element device may be configured to pre-establish transmission bearers corresponding to the transmission bearers established by the first network element device when it is determined that the first network element device supports the transmission bearer pre-establishment function, select one transmission bearer corresponding to the transmission bearer selected by the first network element device from the transmission bearers pre-established by the second network element device when a user service is established, and send information of the service to the first network element device through the selected transmission bearer.

The communication system of the embodiment is further described in detail below by taking implementation of a lub connection between a Radio Network Controller (RNC) and a NodeB in a UMTS system as an example, wherein NodeB corresponds to the first network element device of the embodiment, the RNC corresponds to the second network element device of the embodiment, and when the RNC supports the transmission bearer pre-establishment function, its structure is similar to that of the NodeB (it may be the network element device of embodiment 1). As shown in Fig. 6, a working process of the system includes:
Step 601: negotiation in transmission functions is made.
   after being powered on, a NodeB system obtains a transmission address, for example, an Internet Protocol (IP) address, of the RNC at a corresponding end according to a transmission configuration parameter, and finishes transmission link establishment and handshaking processes with the RNC. A service processing module of the NodeB adds to current Node B Application Part (NBAP) signalling a transmission bearer pre-establishment function supporting indicator and a transmission bearer configuration parameter, such as the number of transmission bearers needed to be pre-established, address and port information corresponding to the bearers and requirements on a service type, a bandwidth and a time delay, and sends the NBAP signalling to the RNC; and a service processing module of the RNC also adds a transmission bearer pre-establishment function supporting indicator and a transmission bearer configuration parameter to the NBAP signalling, and returns the NBAP signalling to the NodeB;
Step 602: a transmission bearer pre-establishment process is executed.
   after learning about whether the corresponding side supports the transmission bearer pre-establishment function or not and whether itself supports the transmission bearer pre-establishment function or not, the RNC or the NodeB performs the following processing:
   if one of the RNC and the NodeB does not support the transmission bearer pre-establishment function, an original system processing flow is adopted in a subsequent service process, and transmission bearer pre-establishment processing is not performed;
   if the RNC and the NodeB both support the transmission bearer pre-establishment function, transmission bearer pre-establishment modules of the RNC and the NodeB initiate the transmission bearer pre-establishment process according to the transmission bearer configuration parameters, such as the number of the pre-established bearers, the address and port information corresponding to each transmission bearer, and the requirements on the service type, on the bandwidth and on the time delay, configured by both sides in Step 601, finish the transmission bearer pre-establishment process and store the transmission bearers.
Step 603: a transmission bearer allocation process is executed.

When the user service is established, the RNC sends NBAP signalling, a radio link establishment or radio link reallocation request, to the NodeB, and adds the pre-established transmission bearer information selected by the service processing module of the RNC; the NodeB receives the signalling and stores the transmission bearer information selected by the RNC;
the NodeB selects one transmission bearer pre-established by itself according to the transmission bearer information sent by the RNC, and gives a response to the RNC through the NBAP signalling, a radio link establishment response or radio link reallocation preparation message; and
the RNC receives the response signalling message, and stores the transmission bearer information selected by the NodeB;
the transmission bearers selected by the RNC and the NodeB in the service processing process are not used by other services, and the transmission bearers will not be allocated to the other services after being selected;
when the RNC or the NodeB need to send certain service data and signalling, their service processing modules send the service data and the signalling to each other through the successfully allocated transmission bearers.

Step 604: a service transmission bearer releasing process is executed.

When the user service is released, the RNC sends NBAP signalling, a radio link deletion or radio link reallocation request, to the NodeB, and simultaneously returns the transmission bearer used for the service to its transmission bearer management module for management; and
the NodeB returns the transmission bearer used for the service to its transmission bearer management module for management after receiving the signalling message, and sends NBAP signalling, a radio link deletion response or radio link reallocation preparation message, to the RNC.

The transmission bearer for the released service is returned to the transmission bearer management module for management in the service processing process, and may be allocated to a user service in need for direct use.

An embodiment of the disclosure further provides a computer storage medium, which stores a computer-executable instruction, wherein the computer-executable instruction is configured to execute the abovementioned method.

It is important to note that each module may be implemented by a Central Processing Unit (CPU), Digital Signal Processor (DSP) or Field-Programmable Gate Array (FPGA) in electronic equipment.

Those skilled in the art should understand that the embodiments of the disclosure may provide a method, a system or a computer program product. Therefore, the disclosure may adopt a hardware embodiment, software embodiment or a combined embodiment of software and hardware. Moreover, the disclosure may adopt a form of computer program product executable on one or more computer-available storage media (including, but not limited to, a disk memory, an optical memory and the like) including computer-available program codes.

The disclosure is described with reference to flowcharts and/or block diagrams of the method, equipment (system) and computer program product according to the embodiment of the disclosure. It should be understood that each flow and/or block in the flowcharts and/or the block diagrams and combinations of the flows and/or blocks in the flowcharts and/or the block diagrams may be implemented by computer program instructions. These computer program instructions may be provided to a universal computer, a dedicated computer, an embedded processor or a processor of other programmable data processing equipment to generate a machine, so that a device for realizing a function specified in one or more flows in the flowcharts and/or one or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto a computer or other programmable data processing devices, so that a series of operating steps are executed on the computer or the other programmable data processing devices to generate processing steps implemented by the computer, and steps for realizing the function specified in one flow or many flows in the flowcharts and/or one block or many blocks in the block diagrams are provided by the instructions executed on the computer or the other programmable data processing equipment.

The above is further detailed description of the disclosure with reference to specific implementation modes and not intended to limit the specific implementation of the disclosure. For those skilled in the art, any simple deductions and replacements made without departing from the concept of the disclosure shall fall within the scope of protection of the disclosure.

## Claims

1. A network element device, comprising a transmission bearer management module and a service processing module, wherein
the service processing module is configured to judge whether a corresponding network element device supports a transmission bearer pre-establishment function or not, and transmit a judgment result to the transmission bearer management module;
the transmission bearer management module is configured to establish transmission bearers required by services between the network element device and the corresponding network element device according to the judgment result; and
the service processing module is further configured to select one transmission bearer from the transmission bearers established by the transmission bearer management module to transmit a service to the corresponding network element device after receiving a user service establishment request.

2. The network element device according to claim 1, wherein the service processing module comprises a judgment sub-module, an information transceiver sub-module and a service processing sub-module;
the information transceiver sub-module is configured to send judgment information to the corresponding network element device, the judgment information comprising information identifying that the network element device supports the transmission bearer pre-establishment function, and configured to receive response information from the corresponding network element device, the response information comprising information identifying whether the corresponding network element device supports the transmission bearer pre-establishment function or not;
the judgment sub-module is configured to judge whether the corresponding network element device supports the transmission bearer pre-establishment function or not according to the response information, and transmit a judgment result to the transmission bearer management module; and
the service processing sub-module is configured to select one transmission bearer from the transmission bearers established by the transmission bearer management module to transmit the service to the corresponding network element device after receiving the user service establishment request.

3. The network element device according to claim 2, wherein the service processing sub-module is further configured to mark the transmission bearer, which is used for the user service, as an idle state after receiving a user service releasing request.

4. The network element device according to claim 2, wherein the judgment information further comprises a transmission bearer configuration parameter of the network element device, and the response information further comprises a transmission bearer configuration parameter of the corresponding network element device; and
the transmission bearer management module is configured to establish the transmission bearers required by the services between the network element device and the corresponding network element device according to the transmission bearer configuration parameters of the network element device and the corresponding network element device when the judgment sub-module determines that the corresponding network element device supports the transmission bearer pre-establishment function.

5. The network element device according to claim 4, wherein the transmission bearer configuration parameter comprises one or more of:
the number of transmission bearers needed to be pre-established, address and port information corresponding to the pre-established transmission bearers, and requirements on a service type, a bandwidth and a time delay.

6. The network element device according to claim 3, wherein the service processing sub-module is further configured to select one transmission bearer from the established transmission bearers in the idle state to transmit the service to the corresponding network element device after receiving the user service establishment request.

7. A communication system, comprising: a first network element device and a second network element device, wherein the first network element device is the network element device according to any one of claims 1 to 6;
the first network element device is configured to judge whether the second network element device supports a transmission bearer pre-establishment function or not; and
the first network element device is further configured to pre-establish transmission bearers required by services between network elements when determining that the second network element device supports the transmission bearer pre-establishment function, select one transmission bearer from the transmission bearers pre-established by the first network element device when a user service is established, and send service information to the second network element device through the selected transmission bearer.

8. A service processing method for a network element device, comprising:
judging whether a corresponding network element device supports a transmission bearer pre-establishment function or not;
establishing transmission bearers required by services between the network element device and the corresponding network element device according to a judgment result; and
selecting one transmission bearer from the established transmission bearers to transmit a service to the corresponding network element device after a user service establishment request is received.

9. The service processing method for a network element device according to claim 8, wherein the step of judging whether the corresponding network element device supports the transmission bearer pre-establishment function or not comprises:
sending judgment information to the corresponding network element device, the judgment information comprising information identifying that the network element device supports the transmission bearer pre-establishment function;
receiving response information from the corresponding network element device, the response information comprising information identifying whether the corresponding network element device supports the transmission bearer pre-establishment function or not; and
judging whether the corresponding network element device supports the transmission bearer pre-establishment function or not according to the response information.

10. The service processing method for a network element device according to claim 8 or 9, further comprising:
marking the transmission bearer, which is used for the user service, as an idle state after a user service releasing request is received.

11. The service processing method for a network element device according to claim 9, wherein the judgment information further comprises a transmission bearer configuration parameter of the network element device, and the response information further comprises a transmission bearer configuration parameter of the corresponding network element device; and
the step of establishing the transmission bearers required by the services between the network element device and the corresponding network element device according to the judgment result comprises:
establishing the transmission bearers required by the services between the network element device and the corresponding network element device according to the transmission bearer configuration parameters of the network element device and the corresponding network element device when it is determined that the corresponding network element device supports the transmission bearer pre-establishment function.

12. The service processing method for a network element device according to claim 10, wherein the step of selecting one transmission bearer from the established transmission bearers to transmit the service to the corresponding network element device after the user service establishment request is received comprises:
selecting one transmission bearer from the established transmission bearers in the idle state to transmit the service to the corresponding network element device after the user service establishment request is received.

13. A computer storage medium, which stores a computer-executable instruction, wherein the computer-executable instruction is configured to execute the method according to any one of claims 8 to 12.
